# EUROPÄISCHE PATENTANMELDUNG

(11) **EP 1 158 285 A1**
(43) Veröffentlichungstag der Anmeldung: **28.11.2001**
(21) Anmeldenummer: 01108813.5
(22) Anmeldetag: 07.04.2001
(51) Int. Cl.: G01K 13/02, G01K 1/08, G01J 5/02

(54) **Infrarot-Strahlungsthermometer mit veränderbarer messspitze**

(30) Priorität: 23.05.2000 DE 10025157
(71) Anmelder: Braun GmbH, 61476 Kronberg im Taunus (DE)
(72) Erfinder: Kraus, Bernhard, 35619 Braunfels (DE); Beerwerth, Frank, 65594 Runkel-Ennerich (DE); Honnefeller, Katja, 61381 Friedrichsdorf (DE)

(57) **Zusammenfassung**

Es wird ein Infrarot-Strahiungsthermometer, insbesondere Ohrthermometer, mit einer Meßspitze (10), deren äußerer Durchmesser und/oder Form durch eine flexible Anordnung (4, 14, 24) veränderbar ist. Dadurch kann sich die Meßspitze selbstätig an die Größe und/oder Kontur der Körperhöhle anpassen oder manuell angepaßt werden. Das Thermometer ist daher von Kindern und Erwachsenen gleichermaßen gut geeignet, obwohl deren Ohrkanäle unterschiedliche Durchmesser aufweisen.

## Beschreibung

Die Erfindung betrifft ein Infrarot-Strahlungsthermometer mit einer in eine Körperhöhle, insbesondere einen Ohrkanal, einbringbaren rohrförmigen Meßspitze, an deren vorderem Ende eine Strahlungseintrittsöffnung oder ein Infrarotsensor angeordnet ist.

Aus der DE 196 04 201 ist ein derartiges Infrarot-Strahlungsthermometer zur Messung der Körpertemperatur einer Person bekannt. Zu diesem Zweck kann die Meßspitze in ein Ohr eingeschoben werden. Die vom Trommelfell und vom Ohrkanal emittierte Infrarot-strahlung gelangt durch die Meßspitze hindurch zu einem Infrarotsensor. Die durch die Infrarotstrahlung im Infrarotsensor hervorgerufene Temperaturerhöhung hat ein elektrisches Ausgangssignal zur Folge, aus der mittels einer Auswerteeinheit die Strahlungstemperatur, d.h. das Fieber, bestimmt werden kann.

Die Meßspitze besitzt einen Außendurchmesser, der für alle Altersklassen geeignet sein soll. Da die Ohrkanaldurchmesser von Kindern und Erwachsenen sich im allgemeinen stark voneinander unterscheiden, ist aus der DE 196 04 201 ferner eine Schutzkappe für Infrarot-Ohrthermometer bekannt, die beispielsweise aus Schaumstoff besteht oder Luftkammern zur Verbesserung der Wärmeisolation aufweist. Eine derartige Schutzkappe paßt sich an die Form und den Durchmesser des Ohrkanals an. Dadurch wird eine mit einer derartigen Schutzkappe versehene Meßspitze bei Erwachsenen und bei Kindern im Ohrkanal zentriert, wodurch die gewünschte Ausrichtung der Meßspitze aufs Trommelfell erleichtert wird.

Allerdings tritt der zentrierende Effekt bei den weitverbreiteten, lediglich aus einer Folie bestehenden Schutzkappen nicht auf, wie sie beispielsweise aus der EP 0472490 B1 bekannt sind. Deshalb gestaltet sich dann die korrekte Ausrichtung der Meßspitze im Ohrkanal schwierig, insbesondere wenn ein Ohrthermometer mit einer für Kinder geeigneten kleinen Meßspitze für Erwachsene verwendet werden soll. Daher wird beispielsweise das unter der Bezeichnung National DM-T2S bzw. DM-T2A vertriebene Infrarot-Ohrthermometer mit zwei Meßspitzen geliefert, die verschiedene Durchmesser aufweisen und gegeneinander austauschbar sind. Somit läßt sich dieses Ohrthermometer an verschiedene Ohrkanaldurchmesser anpassen. Das Wechseln der Meßspitze ist jedoch umständlich und birgt die Gefahr in sich, daß eine Meßspitze verlorengeht.

Es ist Aufgabe der vorliegenden Erfindung, ein Infrarot-Ohrthermometer anzugeben, welches für Personen aller Altersgruppen geeignet ist, da es an die Ohrkanäle verschiedener Personen angepaßt werden kann.

Diese Aufgabe wird durch ein Infrarot-Ohrthermometer gelöst, dessen Meßspitze in ihrem Durchmesser und/oder äußeren Form durch eine flexible Anordnung veränderbar ist. Besonders vorteilhaft ist es, wenn sich die Meßspitze selbsttätig an die Größe und/oder Kontur der Körperhöhle anpaßt oder zumindest manuell an diese anpaßbar ist.

In der Meßspitze eines erfindungsgemäßen Strahlungsthermometers ist in an sich bekannter Weise ein Infrarot-Lichtleiter angeordnet, der sich vom vorderen Ende der Meßspitze bis zu einem Infrarotsensor erstreckt und die durch die Strahlungseintrittsöffnung eintretende Infrarot-Strahlung dem Infrarotsensor zuführt. Der Lichtleiter ist von der flexiblen Anordnung koaxial umgeben. Es kann aber auch der Lichtleiter weggelassen sein, und der Infrarotsensor direkt am vorderen Ende der Meßspitze angeordnet sein.

Bei einer bevorzugten Ausführungsform eines erfindungsgemäßen Thermometers weist die flexible Anordnung eine Mehrzahl von koaxialen und relativ zueinander verschiebbaren Teleskopelementen auf. Durch Verschieben der Teleskopelemente ändert sich die äußere Form der flexiblen Anordnung. Jedes Teleskopelement kann manuell durch ein Betätigungselement verschoben werden, das mit dem Teleskopelement verbunden ist. Vorzugsweise können die Betätigungselemente in mehreren diskreten Stellungen einrasten, in denen die einzelnen Teleskopelemente bestimmte vorgegebene Positionen einnehmen, sodaß sich jeweils eine bestimmte äußere Form der Meßspitze mit einem sich gegebenenfalls längs der Meßspitze stufenweise ändernden Durchmesser ergibt.

Bei einer ersten Variante dieser Ausführungsform sind der Lichtleiter und der Infrarotsensor fest mit dem Gehäuse des Thermometers verbunden, und die Meßspitze besitzt eine nicht veränderbare Länge. Die Meßspitze besitzt dann ihren größten Durchmesser, wenn die vorderen Enden aller Teleskopelemente sich in der Nähe der Strahlungseintrittsöffnung befinden, d.h. die Teleskopelemente aus dem Gehäuse ganz herausgeschoben sind, und ihren kleinsten Durchmesser, wenn die Teleskopelemente soweit wie möglich ins Gehäuse zurückgezogen sind.

Bei einer zweiten Variante dieser Ausführungsform sind der Lichtleiter und der Infrarotsensor nicht fest mit dem Gehäuse des Thermometers verbunden sondern gemeinsam im Gehäuse verschiebbar, d.h. die Meßspitze besitzt eine veränderbare Länge. Die Meßspitze besitzt dann ihren größten Durchmesser und kleinste Länge, wenn die vorderen Enden aller Teleskopelemente sich in der Nähe der Strahlungseintrittsöffnung befinden, d.h. die Teleskopelemente und der Lichtleiter ganz ins Gehäuse zurückgezogen sind, und ihren kleinsten Durchmesser und größte Länge, wenn die Teleskopelemente und der Lichtleiter soweit wie möglich aus dem Gehäuse herausgeschoben sind. Bei dieser Variante bildet der Lichtleiter somit das am weitesten innen liegende Teleskopelement.

Besonders vorteilhaft ist es bei beiden Varianten dieser Ausführungsform, wenn die flexible Anordnung zusätzlich eine flexible Folie enthält, die die Teleskopelemente umgibt, und die die zwangsläufig zwischen den Teleskopelementen vorhandenen Ritzen abdichtet.

Bei einer zweiten Ausführungsform eines erfindungsgemäßen Thermometers besteht die flexible Anordnung aus einem rohrförmigen Element aus Schaumstoff oder weichem Schaumgummi. Das rohrförmige Element kann von einer flexiblen Folie umgeben sein.

Bei einer dritten Ausführungsform eines erfindungsgemäßen Thermometers besteht die flexible Anordnung aus einer mit einem Fluid gefüllten Kammer, deren Außenwand durch eine flexible Folie gebildet ist. Der Außendurchmesser der Kammer ist beispielsweise durch einen Schieber veränderbar. Bei allen Ausführungsformen besteht die flexible Folie vorzugsweise aus einem Material, das leicht zu reinigen ist und sich im Ohrkanal angenehm anfühlt.

Ein erfindungsgemäßes Strahlungsthermometer weist eine Auswertungseinrichtung auf, die aus den vom Infrarotsensor gelieferten Signalen die Körpertemperatur bestimmt. Mit dem Schieber können dazu benötigte Parameter umgeschaltet werden, so daß beispielsweise für Kinder unter sechs Jahren eine rektaläquivalente Temperatur, und für Kinder über sechs Jahre oder Erwachsene dagegen eine zur einer oralen Messung äquivalente Temperatur auf einer Anzeigeeinrichtung angezeigt werden kann.

Nachfolgend werden Ausführungsbeispiele der erfindungsgemäßen Infrarot-Strahlungsthermometer anhand der Figuren näher erläutert. Es zeigen:
- Fig.1A: schematisch einen Querschnitt durch ein erstes erfindungsgemäßes Thermometer mit ausgefahrenen Teleskopelementen;
- Fig.1B: schematisch einen Querschnitt durch das erfindungsgemäße Thermometer nach Fig. 1A jedoch mit eingezogenen Teleskopelementen;
- Fig.2: schematisch einen Querschnitt durch ein zweites erfindungsgemäßes Thermometer;
- Fig.3: schematisch einen Querschnitt durch ein drittes erfindungsgemäßes Thermometer.

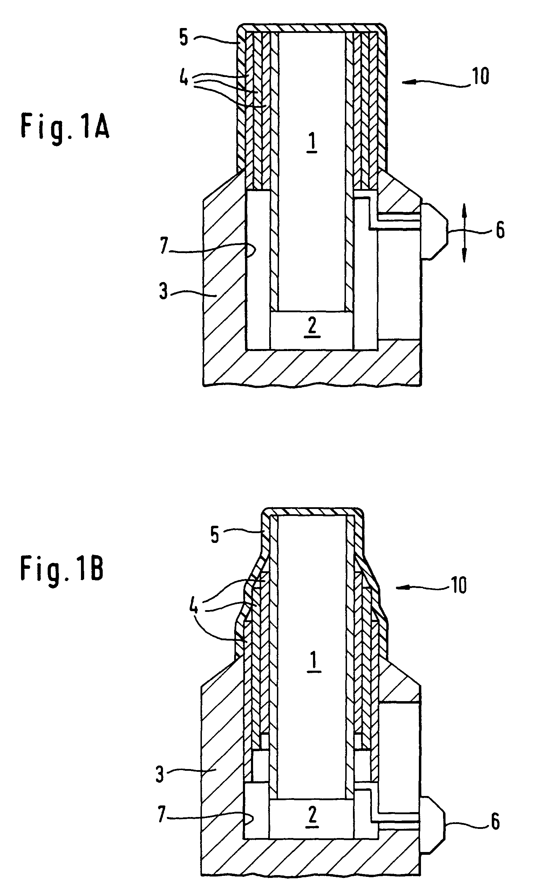

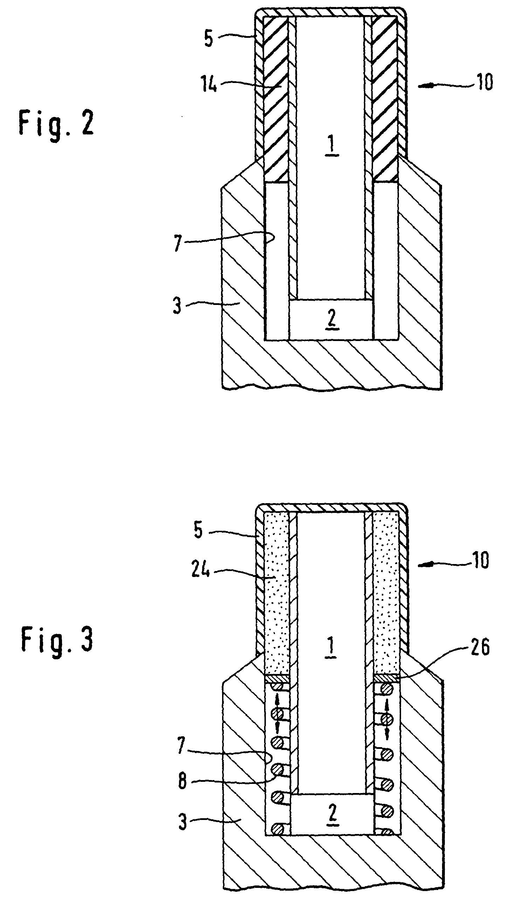

In Figur 1 ist eine Meßspitze eines erfindungsgemäßen Infrarot-Strahlungsthermometers schematisch im Querschnitt dargestellt. Die Meßspitze 10 ragt aus einem Gehäuse 3 heraus. Sie weist einen Lichtleiter 1 auf, der sich vom vorderen Ende der Meßspitze 10 bis zu einem Infrarotsensor 2 erstreckt. Der Lichtleiter 1 ist mit einer Mehrzahl koaxialer Teleskopelemente 4 umgeben, die innerhalb eines um den Lichtleiter 1 vorhandenen koaxialen Hohlraums 7 im Gehäuse 3 gegeneinander verschiebbar sind. Ein an der Außenseite des Gehäuses 3 angebrachter Schieber 6 ist mit dem außenliegenden Teleskopelement verbunden, bei dessen Verschieben die anderen Teleskopelemente in an sich bekannter Weise mitgenommen werden. Der Schieber ist vorzugsweise in drei Stellungen arretierbar, durch die Meßspitzenformen und -durchmesser bestimmt sind, die für Babies, Kinder bis sechs Jahre und ältere Kinder oder Erwachsene geeignet sind. Die Teleskopelemente sind von einer flexiblen Folie 5 umgeben. Es kann jedoch die Folie 5 auch weggelassen sein. Bei einer Variante dieser Ausführungsform ist der Schieber 6 weggelassen und im Hohlraum 7, ähnlich wie in Figur 3 dargestellt, eine Feder vorhanden, die das am weitesten außen liegende Teleskopelement 4 in Richtung auf das vordere Ende der Meßspitze 10 drückt.

Die in Fig. 2 dargestellte Meßspitze eines anderen erfindungsgemäßen Infrarot-Strahlungsthermometers unterscheidet sich von der in Figur 1 dargestellten Meßspitze lediglich dadurch, daß die Teleskopelemente und der Schieber durch ein rohrförmiges Element 14 aus einem weichen Schaumstoff oder Schaumgummi ersetzt sind, welches leicht verformbar ist und sich beim Einführen der Meßspitze in den Ohrkanal selbsttätig der Form und dem Durchmesser des Ohrkanals anpaßt. Das rohrförmige Element 14 ist mit einer flexiblen Folie 5 umgeben. Es kann jedoch die Folie 5 auch weggelassen sein.

Die in Fig. 3 dargestellte Meßspitze eines weiteren erfindungsgemäßen Infrarot-Strahlungsthermometers unterscheidet sich von der in Figur 1 dargestellten Meßspitze lediglich dadurch, daß die Teleskopelemente durch eine mit einem Fluid gefüllte Kammer 24 ersetzt sind, die den Lichtleiter 1 rohrförmig umgibt. Diese Kammer 24 ist außen durch die flexible Folie 5 und innen durch den Lichtleiter 1 und einen verschiebbaren Schieber 26 begrenzt. Die Verformbarkeit der Meßspitze 10 ergibt sich dadurch, daß die Länge der Kammer 24 durch Verschieben des Schiebers 26 veränderbar ist. Vorzugsweise wird der Schieber durch eine Feder 8 in die in Figur 3 dargestellte Stellung gedrückt, bei der das Fluid in Richtung des vorderen Endes der Meßspitze gepreßt ist, und die Meßspitze 10 ihren größten Durchmesser erreicht. Beim Einführen der Meßspitze in einen Ohrkanal verringert sich der Durchmesser der Meßspitze automatisch soweit erforderlich, indem der Schieber 26 gegen den Druck der Feder 8 in Richtung auf den Infrarotsensor 2 bewegt wird, wodurch sich das Fluid bei im wesentlichen konstantem Volumen der Kammer 24 längs des Lichtleiters 1 verteilt, die flexible Folie 5 entsprechend zusammenzieht und der Hohlraum 7 verkleinert. Wegen der Flexibilität der Folie 5 und der Fließfähigkeit des Fluids kann sich die Meßspitze 10 bei jeder Stellung des Schiebers 26 an die Form des Gehörgangs anpassen. Als Fluid ist sowohl ein Gas als auch eine beispielsweise gelartige Flüssigkeit geeignet.

Bei einer Variante dieser Ausführungsform ist die Feder 8 weggelassen und der Schieber 26 ist, ähnlich wie in Figur 1 dargestellt, von außen manuell einstellbar.

Die flexible Folie 5 besteht beispielsweise aus Polyäthylen, das für Infrarotstrahlung in dem für die Temperaturmessung relevanten Wellenlängenbereich durchlässig ist. Sie kann auch aus einem infrarotundurchlässigen Material bestehen, ist dann aber am vorderen Ende des Lichtleiters 1 mit einer Öffnung für den Durchtritt der Infrarotstrahlung versehen. Vorzugsweise ist dann der Lichtleiter an seinem vorderen Ende mit einem infrarotdurchlässigen Fenster verschlossen. Das Fenster ist auch bei Varianten erfindungsgemäßer Meßspitzen vorhanden, bei denen die flexible Folie 5 nicht vorhanden ist.

## Patentansprüche

1. Infrarot-Strahlungsthermometer mit einer in eine Körperhöhle, insbesondere einen Ohrkanal, einbringbaren rohrförmigen Meßspitze (10), an deren vorderem Ende eine Strahlungseintritssöffnung oder ein Infrarotsensor angeordnet ist,
**dadurch gekennzeichnet,**
**daß** der Durchmesser und/oder die äußere Form der Meßspitze (10) durch eine flexible Anordnung (4, 14, 24) veränderbar ist.

2. Infrarot-Körperthermometer nach Anspruch 1,
**dadurch gekennzeichnet,**
**daß** die flexible Anordnung (4) durch eine Mehrzahl von koaxialen und relativ zueinander verschiebbaren Teleskopelementen (4) gebildet ist, und daß die äußere Form der flexiblen Anordnung (4) durch die Positionen der einzelnen Teleskopelemente (4) bestimmt ist.

3. Infrarot-Körperthermometer nach Anspruch 2,
**dadurch gekennzeichnet,**
**daß** das Thermometer einen Lichtleiter aufweist, der das am weitesten innen liegende Teleskopelement bildet.

4. Infrarot-Körperthermometer nach Anspruch 2 oder 3,
**dadurch gekennzeichnet,**
**daß** ein Teleskopelement (4) durch eine Feder (8) in eine bestimmte Position gedrückt wird.

5. Infrarot-Körperthermometer nach Anspruch 2 oder 3,
**dadurch gekennzeichnet,daß**
die Teleskopelemente (4) durch mindestens einen Schieber (6) verschiebbar sind.

6. Infrarot-Körperthermometer nach Anspruch 5,
**dadurch gekennzeichnet,daß**
der Schieber (6) in einer Mehrzahl von diskreten Stellungen einrasten kann, in denen die Teleskopelemente (4) bestimmte vorgegebene Positionen einnehmen.

7. Infrarot-Körperthermometer nach Anspruch 2 oder 3,
**dadurch gekennzeichnet,**
**daß** die flexible Anordnung (4) ferner eine flexible Folie (5) enthält, die die Teleskopelemente (4) umgibt.

8. Infrarot-Körperthermometer nach Anspruch 1,
**dadurch gekennzeichnet,daß**
die flexible Anordnung (14) durch ein rohrförmiges Element (14) aus Schaumstoff oder Schaumgummi gebildet ist.

9. Infrarot-Körperthermometer nach Anspruch 8,
**dadurch gekennzeichnet,**
**daß** die flexible Anordnung (4) ferner eine flexible Folie (5) enthält, die das rohrförmige Element (14) umgibt.

10. Infrarot-Körperthermometer nach Anspruch 1,
**dadurch gekennzeichnet,**
**daß** die flexible Anordnung (24) durch eine mit einem Fluid gefüllte Kammer (24) gebildet ist, deren Außenwand durch eine flexible Folie (5) gebildet ist.

11. Infrarot-Körperthermometer nach Anspruch 10,
**dadurch gekennzeichnet,**
**daß** der Durchmesser der Kammer (24) durch Verschieben eines Schiebers (26) veränderbar ist.

12. Infrarot-Körperthermometer nach Anspruch 11,
**dadurch gekennzeichnet,**
**daß** der Schieber (26) durch eine Feder (8) in eine bestimmte Position gedrückt wird

13. Infrarot-Körperthermometer nach einem der vorhergehenden Ansprüche,
**dadurch gekennzeichnet,**
**daß** die Meßspitze selbsttätig oder manuell an die Größe und/oder Kontur der Körperhöhle anpaßbar ist.
